# EUROPÄISCHE PATENTSCHRIFT

(11) **EP 4 214 611 B1**
(45) Veröffentlichungstag und Bekanntmachung des Hinweises auf die Patenterteilung: **06.08.2025**
(21) Anmeldenummer: 21777771.3
(22) Anmeldetag: 16.09.2021
(51) Int. Cl.: G06F 13/40

(54) **BAUGRUPPENEINHEIT MIT DARIN BEHERBERGTER UND MIT EINEM ÜBERGEORDNETEN SCHALTSYSTEM ELEKTRISCH VERBINDBAREN SCHALTUNGSEINHEIT SOWIE VERFAHREN ZUM TRENNEN EINER SOLCHEN SCHALTUNGSEINHEIT VON EINEM SOLCHEN SCHALTSYSTEM**
ASSEMBLY UNIT HAVING A CIRCUIT UNIT WHICH IS ACCOMMODATED THEREIN AND CAN BE ELECTRICALLY CONNECTED TO A HIGHER-LEVEL SWITCHING SYSTEM, AND METHOD FOR DISCONNECTING A CIRCUIT UNIT OF THIS KIND FROM A SWITCHING SYSTEM OF THIS KIND
UNITÉ D'ASSEMBLAGE DOTÉE D'UNE UNITÉ DE CIRCUIT LOGÉE DANS CELLE-CI ET POUVANT ÊTRE CONNECTÉE ÉLECTRIQUEMENT À UN SYSTÈME DE COMMUTATION DE NIVEAU SUPÉRIEUR, ET PROCÉDÉ DE DÉCONNEXION D'UNE TELLE UNITÉ DE CIRCUIT D'UN SYSTÈME DE COMMUTATION DE CE TYPE

(30) Priorität: 17.09.2020 BE 202005642
(43) Veröffentlichungstag der Anmeldung: 26.07.2023
(73) Patentinhaber: PHOENIX CONTACT GMBH & CO. KG, 32825 Blomberg (DE)
(72) Erfinder: WESSLING, Klaus, 31675 Bückeburg (DE)
(74) Vertreter: Blumbach · Zinngrebe Patentanwälte PartG mbB
(86) Internationale Anmeldenummer: PCT/EP2021/075499
(87) Internationale Veröffentlichungsnummer: WO 2022/058433

(56) Entgegenhaltungen:
- EP-A1- 2 648 109
- EP-A2- 0 254 456
- DE-A1- 10 261 294
- GB-A- 2 385 205
- US-A- 5 530 302
- US-A- 5 625 238

## Beschreibung

Die Erfindung betrifft eine Baugruppeneinheit mit darin beherbergter und mit einem übergeordneten Schaltsystem elektrisch verbindbaren Schaltungseinheit sowie ein Verfahren zum Trennen einer solchen Schaltungseinheit von einem solchen Schaltsystem.

Aus dem Stand der Technik sind Systeme mit sogenannter "Hot-Plug"-Funktionalität bekannt, die den Tausch oder das Hinzufügen von elektronischen Schaltungseinheiten im laufenden Betrieb ermöglichen. Eine solche "Hot-Plug"-Funktionalität kommt beispielsweise in modular aufgebauten Systemen zum Einsatz, um ein schnelles Entfernen einer solchen Schaltungseinheit von einem übergeordneten Schaltsystem oder auch einen Tausch einer solchen, an das Schaltsystem elektrisch angeschalteten Schaltungseinheit zu ermöglichen, ohne das Schaltsystem und insbesondere auch eine daran angeschaltete Anlage abschalten zu müssen, um eine höhere Verfügbarkeit zu erreichen.

In der Regel sind an ein solches Schaltsystem mehrere solcher jeweils einzeln entfern- und tauschbarer Schaltungseinheiten elektrisch angebunden. Zur Entfern- und Tauschbarkeit einer jeweiligen Schaltungseinheit ist eine solche normalerweise in einer Baugruppeneinheit beherbergt, die dann, insbesondere modulartig, mit dem Schaltsystem mechanisch gekoppelt oder auch entkoppelt werden kann.

Hierzu weist das Schaltsystem üblicherweise mehrere Kopplungsstellen, insbesondere Einschub- oder Steckplätze auf, über welche die Baugruppeneinheiten mit dem Schaltsystem koppelbar ist, und letztendlich die jeweilige, in einer der Baugruppeneinheiten beherbergte Schaltungseinheit mit dem Schaltsystem elektrisch verbindbar und auch elektrisch wieder trennbar ist. Ist die Schaltungseinheit mit dem Schaltsystem elektrisch verbunden kann eine dementsprechend mit dem Schaltsystem gekoppelte Baugruppeneinheit häufig auch entsprechend mechanisch gesichert sein, um ein unbeabsichtigtes Trennen der elektrischen Kontakte zu verhindern.

Die Herausforderung liegt hierbei in der Regel darin, beim "elektrischen Trennen" von solchen Schalungseinheiten den Laststrom zu berücksichtigen. So entstehen durch den Ziehvorgang häufig Spannungsspitzen und Funkenüberschläge zwischen den die elektrische Verbindung herstellenden Kontakten der Schaltungseinheit und des Schaltsystems. Je nach Höhe des zu unterbrechenden Ausgangsstromes und/oder der zu unterbrechenden Ausgangslast (z.B. induktiv) müssen die, die elektrische Verbindung herstellenden Kontakte entsprechend "stark" ausgeprägt sein. Außerdem altern diese Kontakte in diesen Momenten sehr stark, da sie ja eigentlich nur für einen vorbestimmten Nennstrom ausgelegt sein müssten.

Um hier gegen zu steuern, werden für einen möglichen Tausch oder das Entfernen einer Baugruppeneinheit mit einer darin beherbergten Schaltungseinheit unter Last auch heutzutage noch in der Regel entsprechend ausgelegte und damit auch kostspielige robuste Kontakte oder spezielle mechanische Unterbrecher eingesetzt.

Darüber hinaus stellt das "elektrische Trennen" einer Schaltungseinheit oder auch allgemein das Ziehen einer Baugruppeneinheit mit der darin beherbergten Schaltungseinheit, d.h. das Fehlern dieser Einheit im Gesamtsystem, häufig einen Systemfehler dar.

Eine alternative Möglichkeit liegt z.B. in der Abschaltung der Peripheriespannung einer gesamten Anlage oder zumindest von Anlagenteilen für den Zeitraum des Tausches bzw. Entfernens. Dafür ist eine zusätzliche Handlung, d.h. insbesondere das Abschalten der Peripheriespannung, erforderlich und hat den Stillstand der Anlage oder zumindest von Anlagenteilen zur Folge.

In der Veröffentlichung DE 102 61 294 B4 ist ein Betätigungselement für eine "Hot-Plug"-Funktionalität einer als Flachbaugruppe ausgebildeten Baugruppeneinheit offenbart, die in einem Flachbaugruppenträger eines Rechnersystems aufgenommen wird. Das Betätigungselement ist dort als separates Element an dem Flachbaugruppenträger angeordnet und besitzt eine Baugruppe mit einem manuell zu betätigenden Schalter zur Unterbrechung der Stromversorgung der Flachbaugruppeneinheit, mit Signalisierungsmitteln zur Signalisierung des Spannungsversorgungs- und Betriebszustands der Flachbaugruppeneinheit und mit einem Sensor zur Anzeige der Position eines zwischen zumindest zwei Schaltpositionen manuell verschiebbar in einem die Baugruppe haltenden Rahmen geführten Verriegelungsschiebers.

Aus der Druckschrift EP 0 254 456 B1 ist zur Bereitstellung einer "Hot-Plug"-Funktionalität für eine Flachbaugruppeneinheit, die über einen Verbinder mit einer Stromversorgungsschaltung, einer Masseleitung und einer Steuerschaltung verbindbar ist, eine auf der Flachbaugruppeneinheit angeordnete Schalteinrichtung mit einem manuell zu betätigenden Entriegelungsschalter zu entnehmen. Beim Entriegeln/Verriegeln verschwenkt der Entriegelungsschalter einen mit diesem zusammenwirkenden Schalter zwischen einem ersten sowie einem zweiten Zustand, wobei der Schalter im zweiten Zustand einen geschlossenen Masseleitungsweg zur Steuerschaltung bereitstellt, und daraufhin mittels einer Taktschaltung jegliche Signalübertragung über den Verbinder verhindert sowie nachfolgend die Stromversorgungsschaltung zur Lieferung von Leistung an die Flachbaugruppeneinheit gesperrt wird. Hierzu muss insgesamt jedoch mittels des mechanisch verschwenkbaren Schalter zunächst ein komplexer Vorgang ausgelöst werden und die Trennung der Signal- und Spannungsversorgung der Flachbaugruppeneinheit erfolgt bereits bei noch nicht entfernter Flachbaugruppeneinheit.

Aus der Veröffentlichung US 5,530,302 ist eine "Hot-Plug"-fähige Flachbaugruppeneinheit in Art eines mit einer Rückwandplatte mit Hauptleistungsbus koppelbaren Leiterplattenmoduls mit Modulspannungsbus bekannt. Das Leiterplattenmodul besitzt einen Auswurfhebel und eine außen am Leiterplattenmodul schwenkbar angeordnete Auswurfhebelabdeckung, die so schwenkbar betätigbar ist, um den Auswurfhebel selektiv zum Verriegeln des Leiterplattenmoduls an der Rückwandplatte abzudecken und zum Entriegeln und nachfolgendem Ziehen des Leiterplattenmoduls freizulegen. Ferner ist ein mit der Auswurfhebelabdeckung zusammenwirkender Schalter vorgesehen, der in Reaktion auf die eingenommene Schwenkposition der Auswurfhebelabdeckung ein erstes bzw. ein zweites Ausgangssignal in einer auf dem Leiterplattenmodul angeordneten Steuereinrichtung bewirkt. Dadurch wird die über den Hauptleistungsbus des an den Modulspannungsbus geführte Leistung zur Versorgung des Leiterplattenmoduls innerhalb einer vorbestimmten Zeitdauer im Leiterplattenmodul selbst langsam hoch bzw. langsam runter geregelt. Die auf dem Hauptleistungsbus geführte Leistung bleibt hierbei während des Hoch- und Runterregelns der Leistung zwischen dem Hauptleistungsbus und dem Modulspannungsbus ununterbrochen und unbeeinflusst.

Aus der EP2 648 109 B1 ist es bekannt, an einer Aufnahme einer Computervorrichtung für ein Wechselmedium eine mechanische oder optische Erfassungseinrichtung vorzusehen, mit welcher das Herausziehen des Wechselmediums aus der Aufnahme erfasst und hierauf basierend beim Herausziehen des Wechselmediums die Energieversorgung von dem Wechselmediumanschluss getrennt und anschließend über einen Prozessor komplett ausgeschaltet wird.

Die GB 2 385 205 B zeigt einen insbesondere auch optischen Schalter zum Aktiveren/Deaktivieren einer Stromversorgung für in einem Gehäuse angeordneten Einschubschlitze, in welche Einschubkarten gesteckt werden können, indem am Gehäuse "Zugbänder" in deren Stellung verändert werden.

Weitere Ausführungsformen von an einem Einschubschlitz zur Aufnahme einer Baugruppeneinheit angeordneten optischen Schaltern, über welche eine Energieversorgung zur Baugruppeneinheit unterbrochen kann, sind z.B. der US 5,625,238, der US 6,125,417 und der US 6,138,194 zu entnehmen.

In dem bekannten Stand der Technik ist für die Hot-Plug-Funktionalität einer Baugruppeneinheit in der Regel folglich eine Vielzahl von insbesondere auch separat von der Baugruppeneinheit angeordneten Komponenten vorgesehen, welches zu einem komplexen und häufig auch Platzeinnehmenden Aufbau insgesamt führt. Weitere Nachteile sind in der oftmals hohen Vielzahl von mechanisch zu bewegenden Komponenten und der damit verbundenen erhöhten Verschleißanfälligkeit zu sehen sowie in einer oftmals abrupten Abschaltung der Signal- und Energieversorgung der Baugruppeneinheit oder gar abrupten Trennung der Baugruppeneinheit von der noch vollständig aktivierten Signal- und Energieversorgung.

Wie vorstehend bereits ausgeführt, müssen, wenn während des Entfernens einer solchen unter Last befindlichen Baugruppeneinheit die Energieversorgung für diese getrennt wird, die Kontakte entsprechend robust ausgeprägt sein, um die während des Entfernens entstehenden Spannungsspitzen dauerhaft aufnehmen zu können und einem vorzeitigen Altern effektiv entgegen zu wirken. In der Regel sind die Kontakte jedoch nur für einen bestimmten Nennstrom ausgelegt.

Der Erfindung liegt die Aufgabe zugrunde, einen verbesserten Weg aufzuzeigen, eine Baugruppeneinheit mit darin beherbergter und mit einem übergeordneten Schaltsystem elektrisch verbundener elektronischer Schaltungseinheit von diesem Schaltsystem zu trennen und mit dem insbesondere auch vorgebeugt werden kann, dass dann bei einer vom Schaltsystem entfernten Baugruppeneinheit auf einen Systemfehler erkannt wird.

Die oben genannte technische Aufgabenstellung ist mit einer Baugruppeneinheit mit den Merkmalen des Anspruchs 1 und mit einem Verfahren gemäß Anspruch 8 gelöst. Zweckmäßige Weiterbildungen sind Gegenstand der jeweiligen Unteransprüche.

Dementsprechend ist bei einer Baugruppeneinheit mit einer in einem Gehäuse beherbergten elektronischen Schaltungseinheit, die zur Signal- und Stromversorgung mit einem übergeordneten Schaltsystem elektrisch verbindbar ist und eine Signalverarbeitungseinheit zur Ansteuerung von an die Baugruppeneinheit angeschlossenen, innerhalb des Gehäuses eingebauten Verbrauchselementen aufweist, gemäß Erfindung vorsehen:
An der Baugruppeneinheit ist ein mechanisches Sicherungs- und Entsicherungselement zur mechanischen Sicherung und Entsicherung der elektronischen Schaltungseinheit in einem mit einem übergeordneten Schaltsystem elektrisch verbundenen Zustand beweglich gehalten, wobei das Sicherungs- und Entsicherungselement relativ zu der Baugruppeneinheit zwischen wenigstens zwei Positionen manuell von außerhalb der Baugruppeneinheit bewegbar ist.

Ferner ist an der Baugruppeneinheit eine Bewegungserfassungsvorrichtung angeordnet, die ausgebildet ist, zur Erfassung einer Relativbewegung des Sicherungs- und Entsicherungselements, wobei die Bewegungserfassungsvorrichtung ausgebildet ist, unter Ansprechen auf eine Relativbewegung aus einer ersten Position, in welcher die elektronische Schaltungseinheit in dem elektrisch verbundenen Zustand vollständig mechanisch gesichert ist, in eine zweite Position, in welcher die elektronische Schaltungseinheit in dem elektrisch verbundenen Zustand zumindest teilweise mechanisch entsichert ist, ein Entsicherungssignal zu erzeugen und an die Signalverarbeitungseinheit weiterzuleiten. Die Signalverarbeitungseinheit ist ferner ausgebildet, in Antwort auf das Entsicherungssignal unter Last befindliche Verbrauchselemente mittels Generierung wenigstens eines Lastfreischaltsignals lastfrei zu schalten, so dass ein vollständiges Trennen der Baugruppeneinheit mit laststromfreier elektronischer Schaltungseinheit von dem übergeordneten Schaltsystem im laufenden Betrieb zu ermöglicht ist.

Mittels einer solchen Baugruppeneinheit ist folglich ferner ein gemäß Lösung der Erfindung vorgeschlagenes Verfahren zum Trennen einer Schaltungseinheit von einem übergeordneten Schaltsystem auf einfache Weise umsetzbar, mit welchem vorgeschlagen wird, dass eine innerhalb eines Gehäuse einer Baugruppeneinheit beherbergte elektronische Schaltungseinheit, die eine Signalverarbeitungseinheit zur Ansteuerung von an die Baugruppeneinheit angeschlossenen, innerhalb des Gehäuses eingebauten Verbrauchselementen aufweist und zur Signal- und Stromversorgung mit einem übergeordneten Schaltsystem elektrisch verbunden wird, in dem elektrisch verbundenen Zustand mit dem übergeordneten Schaltsystem aus einem vollständig mechanisch gesicherten Zustand zunächst in einen zumindest teilweise mechanisch entsicherten Zustand überführt wird, bevor ein Trennen der Schaltungseinheit von dem übergeordneten Schaltsystem ermöglicht wird,
wobei die Überführung aus dem vollständig mechanisch gesicherten Zustand in den zumindest teilweise mechanisch entsicherten Zustand von der Baugruppeneinheit erfasst wird und in Folge unter Last befindliche Verbrauchselemente von der Signalverarbeitungseinheit lastfrei geschaltet werden.

Als einige wesentliche Vorteile der erfindungsgemäßen Lösung sind folglich zu nennen, dass aufgrund der Anordnung der für das Trennen der elektronischer Schaltungseinheit von dem übergeordneten Schaltsystem notwendigen Komponenten lediglich an der Baugruppeneinheit anstelle auch einer Anordnung an dem Schaltsystem eine besonders Platzsparende Anordnung bei wesentlich geringerer Komplexität erzielt wird. Da somit keine vom Schaltsystem und also von aus auf die Baugruppeneinheit wirkende mechanischen Komponenten Zusammenwirken notwendig sind, ist ferner die Verschleißanfälligkeit insgesamt reduziert und auch die Anzahl der benötigten Komponenten kann hierdurch deutlich reduziert werden. Da überdies zunächst die Verbrauchselemente Lastfrei geschaltet werden und folglich für diese kein Laststrom mehr über die elektrischen Kontakte fließt, werden auch die elektrischen Kontakte beim vollständigen Trennen der elektrischen Verbindung zwischen Schaltungseinheit und Schaltsystem geschont und müssen folglich nicht übermäßig stark und robust ausgebildet sein. Schließlich kann der zumindest teilweise mechanisch entsicherte Zustand, in welchen die noch elektrisch mit dem Schaltsystem verbundene Schaltungseinheit zunächst überführt werden muss, bevor ein Trennen der Schaltungseinheit von dem übergeordneten Schaltsystem ermöglicht wird, auch dafür in vorteilhafter Weise genutzt werden, einem fälschlicherweise als Systemfehler aufgefassten Trennen der Baugruppeneinheit vorzubeugen, d.h., dass dann bei einer daraufhin vom Schaltsystem entfernten, und also insbesondere bewusst entfernten Baugruppeneinheit gerade nicht auf einen Systemfehler erkannt wird.

Durch das Verfahren gemäß Erfindung und insbesondere die erfindungsgemäße Baugruppeneinheit können somit elektronische Schaltungseinheiten von dem übergeordneten Schaltsystem getrennt und also entfernt werden, ohne dass dieses einen Stillstand des Schaltsystems, also insbesondere der gesamten Anlage oder einzelner Anlageteilen, zur Folge hätte. Eine zusätzliche manuelle Handlung, bspw. das zusätzliche Abschalten der Peripheriespannung ist für den Zeitraum des Tausches der Baugruppeneinheit somit nicht mehr nötig.

In vorteilhafter Weise können die Kontakte zwischen der elektronischen Schaltungseinheit und dem übergeordneten Schaltsystem weniger robust und somit insgesamt materialsparender ausgelegt werden, da die Spannungsspitzen, die während des Entfernens im eingeschalteten Zustand entstanden sind, nicht mehr von den Kontakten ertragen werden müssen. In vorteilhafter Weise müssen die Kontakte in der erfindungsgemäßen Baugruppeneinheit somit lediglich dafür ausgelegt werden, den Nennstrom zu ertragen, der im Standardbetrieb über die Kontakte zu der Schaltungseinheit fließt.

Insgesamt kann somit eine für die Durchführung des Verfahrens geeignete Baugruppeneinheit gegenüber dem Stand der Technik sehr robust und trotzdem einfach gefertigt sein.

Eine bevorzugte Ausführungsform der vorliegenden Erfindung sieht vor, dass die Signalverarbeitungseinheit der Baugruppeneinheit zusätzlich dazu ausgebildet ist, die Verbrauchselemente von der Schaltungseinheit jeweils einzeln elektrisch abzuschalten, d.h. lastfrei zu schalten, insbesondere mittels Generierung wenigstens mehrerer Lastfreischaltsignale. Die Signalverarbeitungseinheit erzeugt somit zweckmäßig für jedes Verbrauchselement jeweils ein einzelnes Lastfreischaltsignal. Folglich kann jedes Verbrauchselement individuell, insbesondere je nach Typ und Zweck, abgeschaltet werden, sodass durch das Abschalten ansonsten möglicherweise bedingten Fehler und/oder Gefahren effektiv vorgebeugt werden kann. Vorzugsweise kann die Signalverarbeitungseinheit hierzu in zweckmäßiger Weiterbildung auch ausgebildet sein, zum Rückmelden eines vollständigen Laststrom-freien Zustandes aller Verbrauchselemente, z.B. Ablauf einer vorbestimmten Zeitdauer im Anschluss an das Einleiten des oder der Abschaltvorgänge, also insbesondere im Anschluss an das oder die erzeugten Lastfreischaltsignale, und/oder nach Erkennung eines jeweilige lastfreien Zustandes der Verbrauchselemente in Folge entsprechender (Test-)Ansteuerung.

In ergänzender oder alternativer weiter bevorzugten Ausführungsform umfasst die Bewegungserfassungsvorrichtung der Baugruppeneinheit einen optischen Sensor, einen Bewegungssensor und/oder einen Beschleunigungssensor. Hierdurch lässt sich auf besonders einfache und effektive Weise eine Relativbewegung und in Folge die Position des Sicherungs- und Entsicherungselementes eindeutig ermitteln. Auch lässt sich durch wenigstens einen solchen Sensor jegliche Bewegung und also Position des Sicherungs- und Entsicherungselement in einfacher und effektive Weise automatisch und kontinuierlich erfassen. Auch können je nach Applikation unterschiedliche Arten von Sensoren eingesetzt werden, insbesondere kann mit der redundanten Verwendung von unterschiedlichen Sensoren auch eine gesteigerte Anforderung an die Betriebssicherheit in einfacher und effektive Weise sein.

Eine weitere bevorzugte, ergänzende oder alternative Ausführungsform sieht vor, die Bewegungserfassungsvorrichtung zumindest ein Signaleinkopplungselement und ein damit kommunizierendes Signalempfangselement aufweist. Das Signaleinkopplungselement und das damit kommunizierende Signalempfangselement können bevorzugt als optisch miteinander kommunizierende Elemente ausgebildet sein, um z.B. eine Art Lichtschranke zu verwirklichen. Eines dieser beiden Elemente, d.h. entweder das Signaleinkopplungselement oder das Signalempfangselement ist hierbei zweckmäßig an einer Komponente aus der aus dem Gehäuse, dem Sicherungs- und Entsicherungselement und der Schaltungseinheit bestehenden Gruppe von Baugruppeneinheiten-Komponenten angeordnet und das andere dieser beiden Elemente an einer der zwei verbleibenden Komponenten aus dieser Gruppe von Baugruppeneinheiten-Komponenten angeordnet. Vorgesehen mit der Anordnung ferner vorgesehen ist, dass entweder in der ersten Position oder in der zweiten Position des Sicherungs- und Entsicherungselement eine Kommunikation zwischen dem Signaleinkopplungselement und dem Signalempfangselement ermöglicht ist und in der anderen Position keine solche Kommunikation ermöglicht ist.

Da die Kommunikation hierzu folglich in praktischer Ausführung zweckmäßig leitungsungebunden zwischen Signaleinkopplungselement und Signalempfangselement erfolgt, eignet sich somit die vorstehend erwähnte bevorzugte Ausbildung dieser Elemente als optisch miteinander kommunizierende Elemente besonders. Durch das leitungsungebundene und somit insbesondere berührungslose Erfassen der Relativbewegung und also die jeweilige Position des Sicherungs- und Entsicherungselement, ist eine solche Art des Erfassens somit ferner besonders verschleißfrei und in Folge wartungsarm.

In einer weiteren, ergänzenden oder alternativen, bevorzugten Weiterbildung ist das Sicherungs- und Entsicherungselement innerhalb des Gehäuses der Baugruppeneinheit gehalten und besitzt einen Führungsarm, der aus dem Inneren des Gehäuses kommend aus der Baugruppeneinheit heraus geführt ist und/oder ist das Sicherungs- und Entsicherungselement mit einem ein Rastelement zum mechanischem Sichern der elektronischen Schaltungseinheit in elektrisch verbundenem Zustand ausgebildet, insbesondere mit einem Rastelement zum Verrasten mit einem komplementären, am elektrisch zu verbindenden Schaltsystem ausgebildeten Rastelement.

In einer weiter bevorzugten, ergänzenden oder alternativen Ausführungsform ist die Signalverarbeitungseinheit bei Erfassen der zweiten Position, zweckmäßig auch unabhängig von einer zuvor erfassten Relativbewegung, ferner ausgebildet,
- zum Durchführen von Testszenarien beim Ansteuern der Verbrauchselemente und/oder
- zum Erzeugen eines Signals zum Melden eines elektrisch verbundenen jedoch zumindest teilweise mechanisch entsicherten Zustandes und/oder von Diagnoseergebnissen an das übergeordnete Schaltsystem in elektrisch verbundenem Zustand und/oder zum Melden eines elektrisch verbundenen jedoch zumindest teilweise mechanisch entsicherten Zustandes und/oder von Diagnoseergebnissen an eine von der Baugruppeneinheit umfasste Registrierungseinheit.

Die zweite Position des Sicherungs- und Entsicherungselement kann somit nicht nur dafür genutzt werden, von der Signalverarbeitungseinheit selbst Testszenarien, insbesondere auch zur Diagnose der Verbrauchselemente, durch entsprechendes Ansteuern, durchzuführen, z.B. durch eine entsprechend in der Signalverarbeitungseinheit inkorporierte Firmware. Ergänzend oder alternativ kann mit der signalbasierten Meldung an das überlagerte Schaltsystem auch dieses je nach spezifischer Ausbildung, z.B. mittels einer vom Schaltsystem umfassten Speicherprogrammierten Steuerung (SPS), in die Lage versetzt werden, Testszenarien und/oder Diagnoseszenarien, insbesondere in Bezug auf die Verbrauchselemente, selbst anzustoßen und/oder von der Signalverarbeitungseinheit abgesetzte Diagnoseergebnissen auszuwerten. Auch kann das übergeordnete Schaltsystem mit der signalbasierten Meldung in einfacher Weise auf ein möglicher Weise bevorstehendes Trennen der Baugruppeneinheit vorbereitet werden, so dass bei einer daraufhin vom Schaltsystem entfernten Baugruppeneinheit das Schaltsystem, insbesondere eine von diesem umfasste SPS, dieses dann nicht als einen Systemfehler erkennt,**z.B.**dort der dann eintretende Zustand "Modul fehlt" entsprechend berücksichtigt werden kann.

Die zweite Position des Sicherungs- und Entsicherungselement kann folglich ergänzend oder alternativ ferner dafür genutzt werden, entsprechende signalbasierte Meldungen auch an eine von der Baugruppeneinheit selbst umfasste Registrierungseinheit abzusetzen.

So kann eine solche Registrierungseinheit z.B. eine Speichereinheit besitzen, mit welcher darin gespeicherte Diagnoseergebnisse einer späteren Auswertung zur Verfügung gestellt werden können. Auch kann die Registrierungseinheit ergänzend oder alternativ derart vorgesehen sein, dass auf die signalbasierten Meldungen ansprechend wiederum die Signalverarbeitungseinheit, z.B. durch eine entsprechend inkorporierte Firmware, angestoßen wird Testszenarien, insbesondere auch zur Diagnose der Verbrauchselemente, durch entsprechendes Ansteuern der Verbrauchselemente, durchzuführen.

Eine solche Registrierungseinheit kann jedoch auch ergänzend oder alternativ eine Anzeigeeinrichtung für einen Bediener beinhalten, welche also einem Bediener insbesondere den zumindest teilweise entsicherten Zustand anzeigt, z.B. durch eine optische oder akustische Anzeigeeinrichtung. Mittels der Anzeige kann ein Bediener folglich in einfacher und effektiver Weise einen unvollständig mit dem Schaltsystem verbundenen Zustand der Baugruppeneinheit und also insbesondere auch der Schaltungseinheit erkennen, so dass nochmals die Betriebssicherheit insgesamt gesteigert wird. Wird ferner beispielsweise, z.B. Ablauf einer vorbestimmten Zeitdauer im Anschluss an das Einleiten des oder der Abschaltvorgänge, also insbesondere im Anschluss an das oder die erzeugten Lastfreischaltsignale, und/oder nach Erkennung eines jeweilige lastfreien Zustandes der Verbrauchselemente in Folge entsprechender (Test-)Ansteuerung, ein Diagnoseergebnis als eine signalbasierten Meldung derart von der Registrierungseinheit registriert, dass die Lastfreiheit aller Verbrauchselemente gegeben ist, so kann dies dem Bediener entsprechend angezeigt werden, welcher also dann erkennt, dass nunmehr ein Trennen der Baugruppeneinheit mit laststromfreier elektronischer Schaltungseinheit von dem übergeordneten Schaltsystem im laufenden Betrieb möglich, d.h. insbesondere freigegeben ist.

In einer weiteren, besonders bevorzugten, jedoch gleichermaßen ergänzenden oder alternativen Ausgestaltungsform ist die Bewegungserfassungsvorrichtung ferner dazu ausgebildet, unter Ansprechen auf eine Relativbewegung aus der zweiten Position in die erste Position ein Sicherungssignal zu erzeugen und an die Signalverarbeitungseinheit weiterzuleiten, wobei die Signalverarbeitungseinheit ausgebildet ist, in Antwort auf das Sicherungssignal lastfrei geschaltete Verbrauchselemente mit Laststrom zu beaufschlagen.

Die zweite Position kann folglich in besonders zweckmäßiger Weiterbildung nicht nur im Wege eines vollständigen Trennens der Baugruppeneinheit mit laststromfreier elektronischer Schaltungseinheit von dem übergeordneten Schaltsystem genutzt werden, sondern auch für das vollständige Verbinden der Baugruppeneinheit an das übergeordnete Schaltsystem genutzt werden. Insbesondere auch hierfür ist die Signalverarbeitungseinheit somit bei Erfassen der zweiten Position, und zwar unabhängig von einer zuvor erfassten Relativbewegung, entsprechend ausgebildet,
- zum Durchführen von Testszenarien beim Ansteuern der Verbrauchselemente und/oder
- zum Erzeugen eines Signals zum Melden eines elektrisch verbundenen jedoch zumindest teilweise mechanisch entsicherten Zustandes und/oder von Diagnoseergebnissen an das übergeordnete Schaltsystem in elektrisch verbundenem Zustand und/oder zum Melden eines elektrisch verbundenen jedoch zumindest teilweise mechanisch entsicherten Zustandes und/oder von Diagnoseergebnissen an eine von der Baugruppeneinheit umfasste Registrierungseinheit.

Ein Schaltsystem für einer damit elektrisch verbindbare Baugruppeneinheit zeichnet sich gemäß Lösung der Erfindung folglich insbesondere dadurch aus, dass das Schaltsystem gleichermaßen eine Signalverarbeitungseinheit besitzt, z.B. eine wie vorstehend erwähnte SPS, die zur Kommunikation mit der Signalverarbeitungseinheit der Baugruppeneinheit ausgebildet ist, insbesondere bei einem von der Signalverarbeitungseinheit der Baugruppeneinheit zur Meldung eines elektrisch verbundenen jedoch zumindest teilweise mechanisch entsicherten Zustandes und/oder von Diagnoseergebnissen abgesetzten Signals.

Die Erfindung wird nachfolgend anhand einiger bevorzugter Ausführungsformen in Verbindung mit den beiliegenden Zeichnungen näher erläutert, woraus noch weitere Merkmale und Vorteile der Lösung nach der Erfindung offensichtlich werden. Es zeigen:
- Fig. 1: eine erste, auf eine erste Innenseite eines Gehäuses einer erfindungsgemäßen Baugruppeneinheit gerichtete Ansicht auf ein zweckmäßig innerhalb des Gehäuse beweglich gehaltenes mechanisches Sicherungs- und Entsicherungselement;
- Fig. 2: eine zweite, auf eine zweite Innenseite des Gehäuses der Baugruppeneinheit nach Fig. 1 gerichtete Ansicht auf eine im Gehäuse beherbergte elektronische Schaltungseinheit;
- Fig. 3: eine erste exemplarische Ausführungsform eines Sicherungs- und Entsicherungselementes und einer Bewegungserfassungsvorrichtung einer erfindungsgemäßen Baugruppeneinheit zur Erfassung einer ersten und einer zweiten Position des Sicherungs- und Entsicherungselements;
- Fig. 4: eine zweite exemplarische Ausführungsform eines Sicherungs- und Entsicherungselementes und einer Bewegungserfassungsvorrichtung einer erfindungsgemäßen Baugruppeneinheit und
- Fig. 5: ein exemplarisches, vereinfacht dargestelltes Schaltbild zur elektrischen Kopplung einer Bewegungserfassungsvorrichtung mit einer mit einer Signalverarbeitungseinheit einer erfindungsgemäßen Baugruppeneinheit.

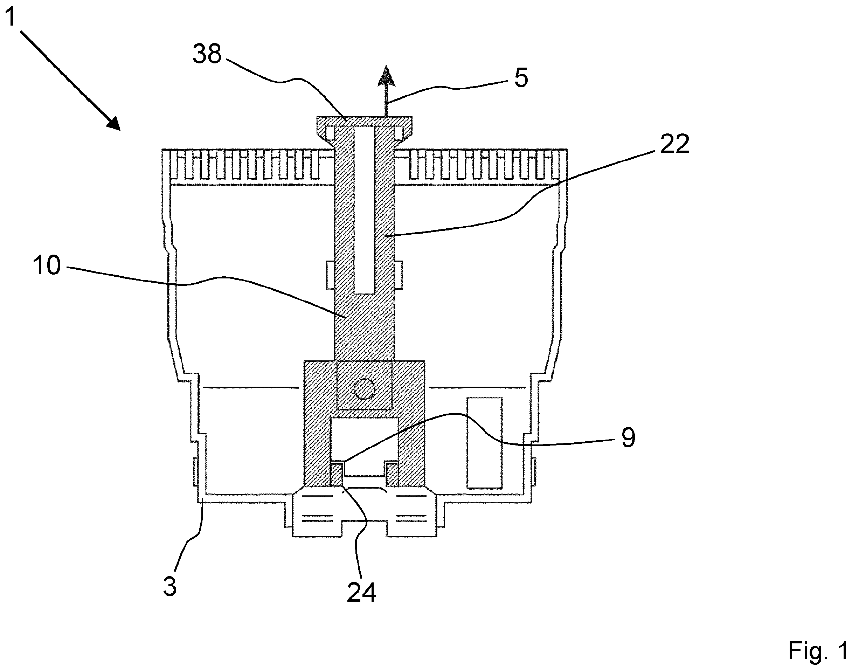

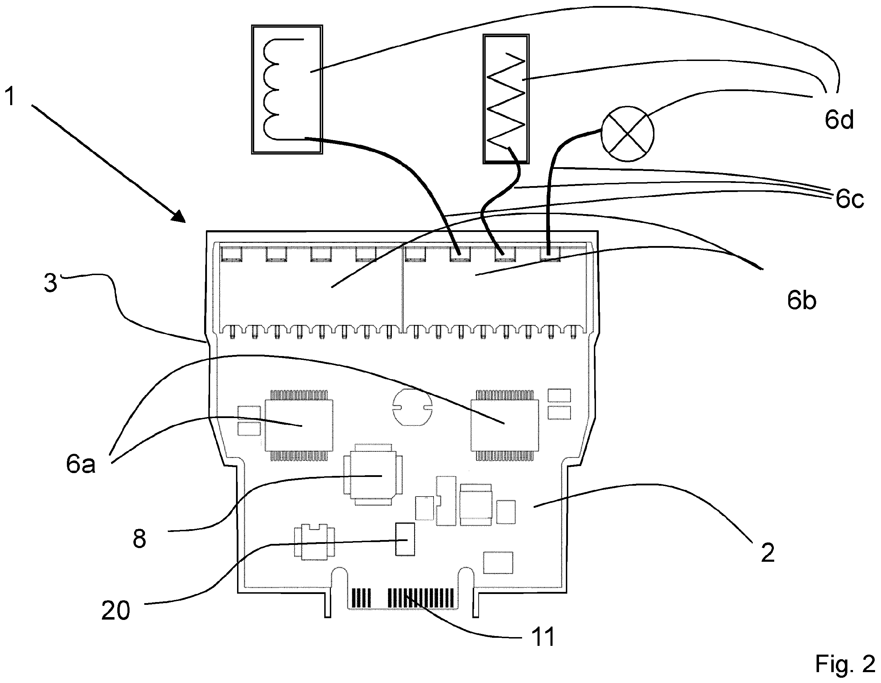

Mit den Fign. 1 und 2 ist eine bevorzugte Ausführungsform einer erfindungsgemäße Baugruppeneinheit 1, welche ein Gehäuse 3 besitzt. Im vorliegenden Fall ist das Gehäuse 3 aus zwei Gehäuseteilen aufgebaut, sodass die im Gehäuse beherbergten Komponenten in einfacher Weise in den Gehäuseteilen aufgenommen werden können und anschließend das Gehäuse durch Zusammenbau der Gehäuseteile vervollständigt wird. Alternativ kann das Gehäuse z.B. auch aus mehr als zwei Gehäuseteilen aufgebaut sein oder das Gehäuse ist einteilig aufgebaut und die darin zu beherbergenden Komponenten werden z.B. durch eine im Gehäuse vorgesehene Öffnung eingesetzt.

Innerhalb eines Gehäuse ist insbesondere eine elektronische Schaltungseinheit 2 beherbergt, die zur Signal- und Stromversorgung mit einem übergeordneten, in den Fign. 1 und 2 aus Gründen der Übersichtlichkeit nicht dargestellten Schaltsystem elektrisch verbindbar ist. Zur elektrischen Verbindung mit dem übergeordneten Schaltsystem sind von der Schaltungseinheit 2 entsprechend ausgebildete elektrische Kontakte 11 vorgesehen. Die Ansicht der Fig. 2 zeigt mit Blick auf eine der Innenseiten des Gehäuses der Baugruppeneinheit gerichtete Ansicht auf eine solche, im Gehäuse 3 beherbergte elektronische Schaltungseinheit 2.

Die Schaltungseinheit 2 weist eine Signalverarbeitungseinheit 8 zur Ansteuerung von an die Baugruppeneinheit angeschlossenen, innerhalb des Gehäuses eingebauten oder virtuellen Verbrauchselementen 6d auf. Bei der dargestellten Ausführungsform sind mehrere Verbrauchselemente 6d beispielhaft als an die Baugruppeneinheit angeschlossene bzw. anschließbare Verbrauchselemente skizziert. In einem solchen Fall können diese somit als externe Verbraucher ausgebildeten Verbrauchselemente mittels elektrischen Anschlussleitungen 6c an einen Peripherieanschluss 6b, insbesondere Standart-Peripherieanschluss, z.B. in Art einer Anschlussleiste, der Schaltungseinheit 2 an die Baugruppeneinheit und also insbesondere an die Schaltungseinheit 2 angeschlossen sein. Ferner kann die die Schaltungseinheit 2 zur Interaktion mit den Verbrauchselementen, insbesondere zur Interaktion mit externen Verbrauchern, Komponenten mit darin hinterlegten Gerätetreibern beherbergen, wie bei Fig. 2 mit den mit dem Bezugszeichen 6a belegten Komponenten angezeigt. Es sei darauf hingewiesen, dass im Rahmen der Erfindung nicht lediglich Verbrauchselemente in Hardware, sondern auch virtuelle Verbrauchselemente umfasst sein können, für welche gleichermaßen entsprechend ausgelegte Gerätetreiber mit der Schaltungseinheit vorgehalten sein können.

Ferner umfasst die Baugruppeneinheit 1 ein daran beweglich gehaltenes mechanisches Sicherungs- und Entsicherungselement 10 zur mechanischen Sicherung und Entsicherung der elektronischen Schaltungseinheit 2 in einem mit dem übergeordneten Schaltsystem elektrisch verbundenen Zustand, welches in jedem Fall relativ zu der Baugruppeneinheit 1 zwischen wenigstens zwei Positionen manuell von außerhalb der Baugruppeneinheit 1 bewegbar gehalten ist. Im dargestellten Ausführungsbeispiel ist das Sicherungs- und Entsicherungselement 10 zweckmäßig innerhalb des Gehäuses 3 gehalten und Fig. 1 zeigt mit einer auf eine andere Innenseite des Gehäuses 3 gerichteten Ansicht eine besonders bevorzugte Ausführungsform solches zweckmäßig innerhalb des Gehäuse beweglich gehaltenes mechanisches Sicherungs- und Entsicherungselements 10. Um dennoch manuell von außerhalb der Baugruppeneinheit 1 bewegbar zu sein, erstreckt sich das Sicherungs- und Entsicherungselement 10 folglich bis aus Baugruppeneinheit heraus und besitzt z.B. zweckmäßig einen Führungsarm 22, der eben aus dem Gehäuseinnern kommend aus Baugruppeneinheit 1 herausgeführt ist. An dem Führungsarm kann ein Griffelement 38 ausgebildet sein, welches einem Bediener das Bewegen des Sicherungs- und Entsicherungselement 10 erleichtert.

Das in der Fig. 1 dargestellte Sicherungs- und Entriegelungselement 10 ist von dem Gehäuse 3 hierbei ferner so beweglich gehaltert aufgenommen, dass es entlang einer Richtung 5, beim dargestellten Beispiel entlang einer Axialrichtung, und entgegengesetzt hierzu von einem Bediener manuell verschiebbar ist. Zum Ausführen einer Relativbewegung aus einer ersten Position, in welcher die elektronische Schaltungseinheit in einem elektrisch verbundenen Zustand mit dem übergeordneten Schaltsystem vollständig mechanisch gesichert ist, in eine zweite Position, in welcher die elektronische Schaltungseinheit 2 zwar noch in dem elektrisch verbundenem Zustand zumindest verbleiben kann jedoch zumindest teilweise mechanisch entsichert ist, muss das Sicherungs- und Entriegelungselement 10 hierzu z.B. entlang einer Richtung 5 bewegt werden, d.h. beispielsweise aus einer wie bei Fig. 1 gezeigten Position in Richtung des mit dem Bezugszeichen 5 belegten Pfeils. In der bei Fig. 1 dargestellten Position greift das Sicherungs- und Entsicherungselement 10 zum mechanischem Sichern der elektronischen Schaltungseinheit 2 greift in elektrisch verbundenem Zustand beispielsweise noch in im Gehäuse 3 angeordnete Sicherungsausnehmungen 9 ein. Das Sicherungs- und Entsicherungselement 10 besitzt hierzu bevorzugt wenigstens ein mechanisches Rastelement 24. An diesem ist dann, wie mit der vorliegenden Ausführungsform beispielhaft dargestellt, zweckmäßig der Führungsarm 22 verbunden, d.h. insbesondere, dass sich ausgehend von dem Rastelement der Führungsarm erstreckt. Alternativ oder ergänzend, in den angehängten Figuren aus Gründen der Übersichtlichkeit jedoch nicht dargestellt, kann das Sicherungs- und Entsicherungselement zum mechanischem Sichern der elektronischen Schaltungseinheit 2 in elektrisch verbundenem Zustand auch mit einem Rastelement zum Verrasten mit einem komplementären, am elektrisch zu verbindenden Schaltsystem ausgebildeten Rastelement ausgebildet sein.

An oder insbesondere für den Fall, wenn das Sicherungs- und Entsicherungselements innerhalb des Gehäuse gehalten ist, innerhalb der Baugruppeneinheit 1 ist eine Bewegungserfassungsvorrichtung vorgesehen, die zur Erfassung einer Relativbewegung des Sicherungs- und Entsicherungselements ausgebildet ist, und also insbesondere zur Erfassung, ob das Sicherungs- und Entsicherungselements die erste Position oder die zweite Position eingenommen hat.

Die Bewegungserfassungsvorrichtung ist ausgebildet, unter Ansprechen auf eine Relativbewegung aus der ersten Position, in welcher die elektronische Schaltungseinheit 2 in dem elektrisch verbundenen Zustand vollständig mechanisch gesichert ist, in eine zweite Position, in welcher die elektronische Schaltungseinheit 2 in dem elektrisch verbundenen Zustand zumindest teilweise mechanisch entsichert ist, ein Entsicherungssignal 14 zu erzeugen und an die Signalverarbeitungseinheit 8 weiterzuleiten.

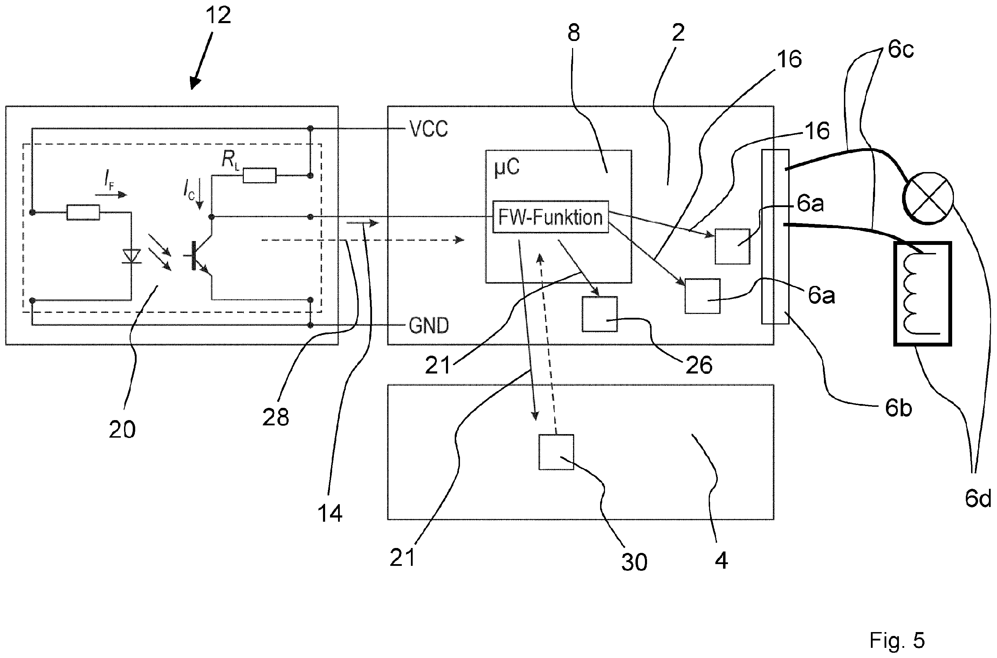

Die Fig. 5 zeigt hierzu ein exemplarisches, vereinfacht dargestelltes Schaltbild zur elektrischen Kopplung einer Bewegungserfassungsvorrichtung 12 mit einer Signalverarbeitungseinheit 8 einer erfindungsgemäßen Baugruppeneinheit. Der in Fig. 5 links gezeigte Teil der Bewegungserfassungsvorrichtung 12 bezieht seine Spannungsversorgung zweckmäßig als Teil der Schaltungseinheit 2 über diese und ist entsprechend an Bezugspotential GND sowie an eine Betriebsspannung VSS angeschlossen. Die ferner von der Schaltungseinheit 2 umfasste Signalverarbeitungseinheit 8 besitzt z.B. einen Mikrokontroller µC, insbesondere mit darin inkorporierten Firmware bzw. Firmware-Funktion "FW-Funktion". Wird also ein Entsicherungssignal 14 von der Bewegungserfassungsvorrichtung 12 erzeugt und an die Signalverarbeitungseinheit 8 weitergeleitet, ist diese ausgebildet, in Antwort auf das Entsicherungssignal 14 unter Last befindliche Verbrauchselemente 6d lastfrei zu schalten, insbesondere mittels wenigstens eines Lastfreischaltsignals 16, so dass ein vollständiges Trennen der Baugruppeneinheit 1 mit laststromfreier elektronischer Schaltungseinheit 2 von dem übergeordneten Schaltsystem im laufenden Betrieb ermöglicht ist. Zum Abschalten, d.h. im Rahmen der Erfindung zum Lastfreischalten von unter Last befindlichen Verbrauchselementen 6d, insbesondere zum Lastfreischalten jedes der Verbrauchselemente 6d einzeln, zweckmäßiger Weise mittels Generierung entsprechend mehrerer Lastfreischaltsignale 16, wie bei Fig. 5 zu sehen, kann die Signalverarbeitungseinheit 8 somit z.B. bevorzugt mit einer hierfür entsprechend geeigneten, in der Signalverarbeitungseinheit 8, insbesondere in einem von dieser umfassten Mikrokontroller, inkorporierten Firmware ausgerüstet sein. Sind, wie bei Fig. 5 dargestellt, zur Interaktion mit den Verbrauchselementen 6b Komponenten 6a mit darin hinterlegten Gerätetreibern, zweckmäßig elektrisch zwischen die Signalverarbeitungseinheit 8 und den Verbrauchselementen 6b geschaltet, von der Schaltungseinheit 2 umfasst, insbesondere zur Interaktion mit externen Verbrauchern, die mittels elektrischen Anschlussleitungen 6c an einen Peripherieanschluss 6b der Schaltungseinheit 2 elektrisch angeschlossen sind, erfolgt die Ansteuerung der Verbrauchselementen 6d durch die Signalverarbeitungseinheit 8 somit in praktischer Ausführung unter Zwischenschaltung der in den Komponenten 6a hinterlegten Gerätetreibern. In einem solchen Fall kann in weiterer praktischer Ausführung das Abschalten von unter Last befindlichen Verbrauchselementen 6d in praktischer Ausführung z.B. auch durch Abschalten der in den Komponenten 6a hinterlegten Gerätetreibern erfolgen, wodurch dann in Folge auch die Verbrauchselemente 6d abgeschaltet werden.

Sind die unter Last befindlichen Verbrauchselemente 6d somit gemäß der Erfindung lastfrei geschaltet bevor das Modul von seinem Steckplatz entfernt wird, sind folglich auch die Kontakte der Schnittstellen 6b und 11 lastfrei und es kann ein vollständiges Trennen der Baugruppeneinheit 1 mit laststromfreier elektronischer Schaltungseinheit 2 von dem übergeordneten Schaltsystem im laufenden Betrieb ermöglicht werden.

Die bei Fig. 5 beispielhaft skizzierte Bewegungserfassungsvorrichtung 12 besitzt einen Sensor, der applikationsspezifisch aufgebaut sein kann, insbesondere als optischer Sensor, Bewegungssensor und/oder als Beschleunigungssensor. Im vorliegenden Fall beinhaltet ein Signalempfangselement 20 des Sensors ferner einen optischen Schalter, der z.B. auf eingekoppeltes Licht, d.h. bei Lichteinfall reagiert und dann über die dargestellte Diode ein optisches Schaltsignal in den dargestellten Transistor einkoppelt, wodurch letztlich das Entsicherungssignal 14 erzeugt und an die Signalverarbeitungseinheit 8 weitergeleitet wird. Ein Schalter kann jedoch auch aufgebaut sein, um anders herum zu arbeite, d.h. z.B., wenn mittels der dargestellten Diode kein optisches Signal mehr in gegeben ist, wird der Schaltvorgang zur Erzeugung des Entsicherungssignals 14 ausgelöst.

Zur Bewegungserfassungsvorrichtung 12 gehört folglich in der Regel neben einem Signalempfangselement 20, zumindest ein Signaleinkopplungselement, das jedoch bei Fig. 5 aus Gründen der Übersichtlichkeit nicht dargestellt ist. Es sei ferner darauf hingewiesen, dass die Bewegungserfassungsvorrichtung 12 auch andere Signalempfangselemente, als das in Fig. 5 dargestellte umfassen kann, um die erste Position und die zweite Position des Sicherungs- und Entsicherungselements 10 zu erfassen. Insbesondere muss die interne Kommunikation Bewegungserfassungsvorrichtung 12 zur Bewegungserfassung nicht zwingend leitungsungebunden, d.h. müssen solche Empfangselemente nicht leitungsungebunden ausgeführt sein. Da eine interne Kommunikation, d.h. insbesondere zwischen einem Signaleinkopplungselement und einem hiermit kommunizierenden Signalempfangselement jedoch in praktischer Ausführung zweckmäßig leitungsungebunden erfolgt, eignet sich somit die vorstehend erwähnte bevorzugte Ausbildung dieser Elemente als optisch miteinander kommunizierende Elemente besonders.

Das Signaleinkopplungselement kann ferner als Sendeelement ausgebildet sein oder z.B. auch als Reflexionselement. Bekanntermaßen kann im Falle eines als Reflexionselement ausgebildeten Signaleinkopplungselement ein Sendeelement und das Signalempfangselement auch innerhalb einer Einheit integriert werden.

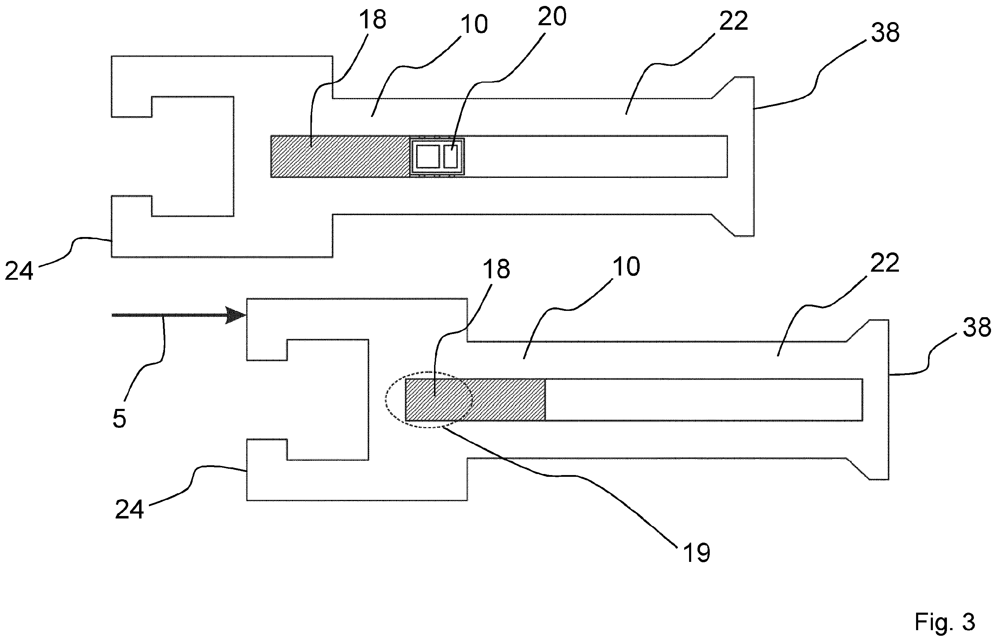

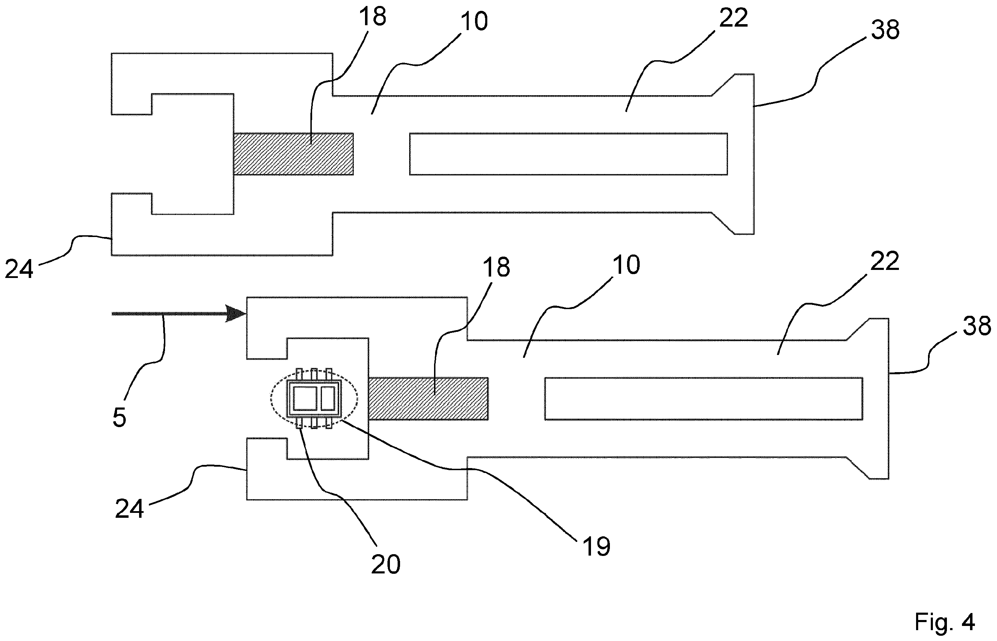

Die Fign. 3 und 4 zeigen zwei exemplarische Ausführungsformen eines Sicherungs- und Entsicherungselementes 10 und einer Bewegungserfassungsvorrichtung, jeweils in einer ersten Position des Sicherungs- und Entsicherungselements 10 und einer zweiten Position des Sicherungs- und Entsicherungselements 10. Die erste Position ist in den Fign 3 und 4 jeweils oben und die zweite Position jeweils unten gezeigt.

Wie zu sehen, besitzt die Bewegungserfassungsvorrichtung gemäß Fign. 3 und 4 jeweils ein Signaleinkopplungselement 18 und ein damit kommunizierendes Signalempfangselement 20. Eines dieser beiden Elemente 18 und 20 ist hierbei an einer Komponente aus der aus dem Gehäuse 3, dem Sicherungs- und Entsicherungselement 10 und der Schaltungseinheit 2 bestehenden Gruppe von Komponenten angeordnet ist und das andere dieser beiden Elemente 18 und 20 an einer der zwei verbleibenden Komponenten aus dieser Gruppe von Komponenten angeordnet ist. Bei den dargestellten Ausführungsformen ist das Signaleinkopplungselement 18 z.B. an dem Sicherungs- und Entsicherungselement 10 angeordnet und das Signalempfangselement 20 z.B. an der der Schaltungseinheit 2, insbesondere, da hierdurch eine unter Bezugnahme auf Fig. 5 beschriebene Schaltung zur elektrischen Kopplung einer Bewegungserfassungsvorrichtung 12 mit einer Signalverarbeitungseinheit 8 einfacher aufbaubar ist, als wenn das Signalempfangselement 20 zunächst an dem Gehäuse angeordnet ist.

Bei den dargestellten Beispielen sind die Signaleinkopplungselemente 18 jeweils als Reflexionselemente ausgebildet. Ferner sind bei den dargestellten Beispielen die miteinander kommunizierenden Elemente 18 und 20 gemäß besonders zweckmäßiger Ausführung als optisch miteinander kommunizierende Elemente, d.h. als optische Elemente aufgebaut.

Die Anordnung des Signaleinkopplungselements 18 und des Signalempfangselements 20 kann nunmehr, wie z.B. bei Fig. 3 dargestellt, so gewählt sein, dass in der ersten Position des Sicherungs- und Entsicherungselements 10 keine Kommunikation zwischen dem Signaleinkopplungselement 18 und dem Signalempfangselement 20 ermöglicht ist, gemäß dargestelltem Beispiel eine über das Signaleinkopplungselement 18 in Richtung auf das Signalempfangselement 20 bewirkte Signalreflexion nicht möglich ist. In der anderen, d.h. zweiten Position ist eine solche Kommunikation ermöglicht, gemäß dargestelltem Beispiel eine über das Signaleinkopplungselement 18 in Richtung auf das Signalempfangselement 20 bewirkte Signalreflexion möglich.

Die Anordnung des Signaleinkopplungselements 18 und des Signalempfangselements 20 kann jedoch, wie z.B. bei Fig. 4 dargestellt, auch so gewählt sein, dass in der ersten Position des Sicherungs- und Entsicherungselements 10 eine Kommunikation zwischen dem Signaleinkopplungselement 18 und dem Signalempfangselement 20 ermöglicht ist, gemäß dargestelltem Beispiel eine über das Signaleinkopplungselement 18 in Richtung auf das Signalempfangselement 20 bewirkte Signalreflexion möglich ist. In der anderen, d.h. zweiten Position ist keine solche Kommunikation ermöglicht, gemäß dargestelltem Beispiel eine über das Signaleinkopplungselement 18 in Richtung in Richtung auf das Signalempfangselement 20 bewirkte Signalreflexion nicht möglich.

Mit dem Bezugszeichen 19 ist hierbei in den Fign. 3 und 4 jeweils beispielhaft der Zustand markiert, bei welchem in den dargestellten Beispielen bei einer Relativbewegung des Sicherungs- und Entsicherungselements 10 aus der ersten Position in die zweite Position ein Wechsel eines Signalzustandes ausgelöst wird und also in Folge das Entsicherungssignal 14 erzeugt wird. Bei Fig. 3 ist dieser Zustand 19 bei ermöglichter bzw. bewirkter Signalreflexion gegeben, bei Fig. 4 bei nicht ermöglichter bzw. bei Ausbleiben der Signalreflexion.

Vorzugsweise ist die Signalverarbeitungseinheit 8 bei Erfassen der zweiten Position ferner dafür ausgebildet z.B. mittels einem wie bei Fig. 5 grob skizzierten Mikrokontroller µC, insbesondere mit darin inkorporierten Firmware "FW-Funktion", Testszenarien insbesondere auch zur Diagnose der Verbrauchselemente 6d, durch entsprechendes Ansteuern der Verbrauchselemente 6d, durchzuführen. Hierfür notwendige Ansteuersignale können z.B. dem Lastfreischaltsignal 16 zusätzlich aufgeprägt sein. Bei der gemäß Fig. 5 skizzierten Ausführungsform erfolgt die Ansteuerung der Verbrauchselemente somit zunächst wieder unter Zwischenschaltung der in den Komponenten 6a hinterlegten Gerätetreibern.

Ergänzend oder alternativ kann die Signalverarbeitungseinheit 8 bei Erfassen der zweiten Position auch dafür ausgebildet z.B. mittels dem wie bei Fig. 5 grob skizzierten Mikrokontroller µC, insbesondere mit der darin inkorporierten Firmware "FW-Funktion", ein Signal 21 zum Melden eines elektrisch verbundenen jedoch zumindest teilweise mechanisch entsicherten Zustandes und/oder von Diagnoseergebnissen an das übergeordnete Schaltsystem 4 in elektrisch verbundenem Zustand und/oder zum Melden eines elektrisch verbundenen jedoch zumindest teilweise mechanisch entsicherten Zustandes und/oder von Diagnoseergebnissen an eine von der Baugruppeneinheit 1 umfasste Registrierungseinheit 26.

Mittels einer solchen oder vergleichbaren signalbasierten Meldung 21 an das überlagerte Schaltsystem 4 kann dieses z.B. je nach spezifischer Ausbildung, z.B. mittels einer vom Schaltsystem umfassten Signalverarbeitungseinheit 30, z.B. einer speicherprogrammierten Steuerung (SPS), in die Lage versetzt werden, Testszenarien und/oder Diagnoseszenarien, insbesondere in Bezug auf die Verbrauchselemente, selbst anzustoßen, wie bei Fig. 5 mit dem gestrichelten Pfeil angedeutet, und/oder von der Signalverarbeitungseinheit abgesetzte Diagnoseergebnissen auszuwerten. Auch kann das übergeordnete Schaltsystem 4 mit der signalbasierten Meldung in einfacher Weise auf ein möglicher Weise bevorstehendes Trennen der Baugruppeneinheit vorbereitet werden, so dass bei einer daraufhin vom Schaltsystem entfernten Baugruppeneinheit das Schaltsystem, insbesondere eine von diesem umfasste SPS, dieses dann nicht als einen Systemfehler erkennt.

Wird eine solche oder vergleichbare signalbasierte Meldung 21 in der zweiten Position des Sicherungs- und Entsicherungselements 10 an eine von der Baugruppeneinheit 1 selbst umfasste Registrierungseinheit 26 abgesetzt, können in dieser, sofern sie eine Speichereinheit besitzt, z.B. Diagnoseergebnisse gespeichert und diese für eine spätere Auswertung zur Verfügung gestellt werden.

Auch kann die Registrierungseinheit 26 ergänzend oder alternativ derart vorgesehen sein, dass auf die signalbasierten Meldungen ansprechend wiederum die Signalverarbeitungseinheit, z.B. durch eine entsprechend inkorporierte Firmware, angestoßen wird, Testszenarien, insbesondere auch zur Diagnose der Verbrauchselemente, durch entsprechendes Ansteuern der Verbrauchselemente, durchzuführen.

Eine solche Registrierungseinheit 26 kann jedoch auch ergänzend oder alternativ eine Anzeigeeinrichtung für einen Bediener beinhalten, welche also einem Bediener insbesondere den zumindest teilweise entsicherten Zustand anzeigt, z.B. durch eine optische oder akustische Anzeigeeinrichtung. Mittels der Anzeige kann ein Bediener folglich in einfacher und effektiver Weise einen unvollständig mit dem Schaltsystem 4 verbundenen Zustand der Baugruppeneinheit und also insbesondere auch der Schaltungseinheit erkennen, so dass nochmals die Betriebssicherheit insgesamt gesteigert wird. Wird ferner beispielsweise, z.B. Ablauf einer vorbestimmten Zeitdauer im Anschluss an das Einleiten des oder der Abschaltvorgänge, also insbesondere im Anschluss an das oder die erzeugten Lastfreischaltsignale 16, und/oder nach Erkennung eines jeweilige lastfreien Zustandes der Verbrauchselemente in Folge entsprechender (Test-)Ansteuerung, ein Diagnoseergebnis als eine signalbasierte Meldung derart von der Registrierungseinheit 26 registriert, dass die Lastfreiheit aller Verbrauchselemente gegeben ist, so kann dies dem Bediener entsprechend angezeigt werden, welcher also dann erkennt, dass nunmehr ein Trennen der Baugruppeneinheit mit laststromfreier elektronischer Schaltungseinheit von dem übergeordneten Schaltsystem im laufenden Betrieb möglich, d.h. insbesondere freigegeben ist.

In einer weiteren, besonders bevorzugten, jedoch gleichermaßen ergänzenden oder alternativen Ausgestaltungsform ist die Bewegungserfassungsvorrichtung ferner dazu ausgebildet, unter Ansprechen auf eine Relativbewegung aus der zweiten Position in die erste Position ein Sicherungssignal 28, wie bei Fig. 5 gestrichelt skizziert, zu erzeugen und an die Signalverarbeitungseinheit weiterzuleiten, wobei die Signalverarbeitungseinheit dann zweckmäßig ausgebildet ist, in Antwort auf das Sicherungssignal lastfrei geschaltete Verbrauchselemente mit Laststrom zu beaufschlagen.

Auch hierbei dient ein zunächst in der zweiten Position erzeugtes Meldungssignal 21 z.B. auch zur Meldung, dass zwar ein elektrisch verbundener, jedoch mechanisch zumindest teilweise nicht gesicherter Zustand der Schaltungseinheit 2 vorliegt. Die von der Baugruppeneinheit 1 umfasste Meldeeinheit 26 kann in diesem Fall den Bediener somit auch warnen, dass die elektronische Schaltungseinheit 2 nicht vollständig in den Einschub eingesetzt ist, sodass der Bediener diesen fehlerhaften Zustand korrigieren kann.

Beim Einführen einer Baugruppeneinheit 1 in die Aufnahme eines übergeordneten Schaltsystems liegt also ein für diesen Fall Signalwechsel auslösender Zustand, nicht wie bei den Fign. 3 und 4 jeweils beispielhaft mit dem Bezugszeichen 19 markiert dargestellt, vor, sondern basierend auf den Fign. 3 und 4, jeweils nach einer Relativbewegung des Sicherungs- und Entsicherungselements 10 aus der zweiten Position in die erste Position. Basierend auf Fig. 3 wäre dieser Zustand somit bei nicht mehr ermöglichter bzw. ausbleibender Signalreflexion gegeben, basierend auf Fig. 4 bei dann ermöglichter bzw. bewirkter Signalreflexion

Wie dem Fachmann an und für sich bekannt, besitzt ein wie z.B. bei Fig. 5 angedeutetes Schaltsystem 4 zur Aufnahme von Baugruppeneinheiten entsprechende Aufnahmen, z.B. mehrere Einschübe, die im Rahmen der Erfindung dann zweckmäßig dazu ausgebildet sind, jeweils eine Baugruppeneinheit 1 in einer Aufnahme aufzunehmen. Bei der Aufnahme einer solchen Baugruppeneinheit ist dann, wie vorstehend beschrieben, in der zweiten Position die elektronische Schaltungseinheit 2 in dem elektrisch verbundenen Zustand mit dem Schaltsystem, jedoch zumindest teilweise mechanisch entsichert und in ersten Position ist dann Schaltungseinheit 2 in dem elektrisch verbundenen Zustand und vollständig mechanisch gesichert.

In dem elektrisch verbundenen Zustand mit dem Schaltsystem 3 sind folglich die von der Schaltungseinheit 2 entsprechend ausgebildeten elektrischen Kontakte 11 mit entsprechend komplementär in der am Schaltsystem vorgesehenen, aus Gründen der Übersichtlichkeit nicht dargestellten Kontakten elektrisch verbunden.

Ferner muss das Schaltsystem im Rahmen der Erfindung eine Signalverarbeitungseinheit besitzen, z.B. die bei Fig. 5 angedeutete Signalverarbeitungseinheit 30, die zur Kommunikation mit der Signalverarbeitungseinheit 8 der Schaltungseinheit 2 entsprechend ausgebildet ist. Im Rahmen der Erfindung ist die Signalverarbeitungseinheit 30 daher insbesondere bei einem von der Signalverarbeitungseinheit 8 der Baugruppeneinheit zur Meldung eines elektrisch verbundenen jedoch zumindest teilweise mechanisch entsicherten Zustandes und/oder von Diagnoseergebnissen abgesetzten Signals 21 zur Kommunikation mit der Signalverarbeitungseinheit 8 der Schaltungseinheit 2 entsprechend ausgebildet.

Unter Berücksichtigung vorstehender Beschreibung ist somit ersichtlich, dass unter Anwendung der Lösung gemäß Erfindung die stromtreibenden Ausgänge bzw. die Last der Baugruppeneinheit 1, d.h. insbesondere der Schaltungseinheit 2, elektronisch abgeschaltet werden bevor ein Trennen der Schaltungseinheit von dem übergeordneten Schaltsystem ermöglicht werden soll, so dass der hohe Laststrom nicht mehr über die zu trennende Schnittstelle der elektrischen Kontakte fließen kann.

Gleichzeitig können z.B. entsprechende Diagnosemeldungen an das überlagerte Schaltsystem 3, z.B. an eine darin integrierte SPS abgesetzt werden, sodass mit einer solchen "Systemfunktion" der Signalverarbeitungseinheit 8 daraufhin unterschiedliche vordefinierte Benutzungsfälle, sogenannte Use-Cases, abgeleitet werden können.

Mit der Lösung nach der Erfindung kann damit z.B. insbesondere auch zwischen einem gewollten "Ziehen" bzw. Trennen und einem "zufälligem Rausfallen" aus der Aufnahme des übergeordneten Schaltsystems 3 unterschieden werden.

Ist z.B. für den Abschaltvorgang eine gewisse Wartezeit zwischen Entriegeln und Ziehen erforderlich, eignet sich insbesondere eine Registrierungseinheit 26 mit einer optischen oder akustischen Anzeige, die dann entsprechend angesteuert werden kann, sodass hierüber die "Erlaubnis" für den Bediener zum Ziehen anzeigbar ist.

Kann oder müssen in dem übergeordneten Schaltsystem 4 bis zum tatsächlichen Ziehen der Baugruppeneinheit 1 Vorkehrungen getroffen werden, bevor die Baugruppeneinheit 1 gezogen werden darf, damit nicht auf einen Systemfehler erkannt wird, so kann die Signalverarbeitungsvorrichtung 30 z.B. auch gemäß weiterer zweckmäßiger Ausgestaltung diese optische Anzeige der Registrierungseinheit 26 ansteuern, z.B. über einen azyklisch ausgeführten azyklischen Dienst, bspw. durch Schreiben eines Parameters.

Zusammenfassend kann somit ferner festgehalten werden, dass mit der Erfindung ein, insbesondere gegenüber dem Stand der Technik wesentlich verbessertes, Verfahren zum Trennen einer innerhalb eines Gehäuse 3 einer Baugruppeneinheit 1 beherbergten elektronische Schaltungseinheit 2 vorgeschlagen ist, bei welchem die Schaltungseinheit 2 eine Signalverarbeitungseinheit 8 zur Ansteuerung von an die Baugruppeneinheit angeschlossenen, innerhalb des Gehäuses eingebauten oder virtuellen Verbrauchselementen 6d aufweist und zur Signal- und Stromversorgung mit einem übergeordneten Schaltsystem 4 elektrisch verbunden wird.

Hierbei wird die Schaltungseinheit 2 in elektrisch verbundenem Zustand mit dem übergeordneten Schaltsystem 4 aus einem vollständig mechanisch gesicherten Zustand zunächst in einen zumindest teilweise mechanisch entsicherten Zustand überführt, bevor ein Trennen der Schaltungseinheit von dem übergeordneten Schaltsystem ermöglicht wird. Das Überführen aus dem vollständig mechanisch gesicherten Zustand in den zumindest teilweise mechanisch entsicherten Zustand kann hierbei von der Baugruppeneinheit 1 selbst erfasst und in Folge unter Last befindliche Verbrauchselemente 6d von der Signalverarbeitungseinheit 8 lastfrei geschaltet werden.

In zweckmäßiger Weise werden in dem elektrisch verbundenen Zustand mit dem übergeordneten Schaltsystem jedoch zumindest teilweise mechanisch entsicherten Zustand von der Signalverarbeitungseinheit 8 Testszenarien beim Ansteuern der Verbrauchselemente 6d durchgeführt werden und/oder es wird ein Signal 21 erzeugt, zum Melden eines elektrisch verbundenen jedoch zumindest teilweise mechanisch entsicherten Zustandes und/oder Diagnoseergebnissen an das übergeordnete Schaltsystem 4 in elektrisch verbundenem Zustand und/oder zum Melden eines elektrisch verbundenen jedoch zumindest teilweise mechanisch entsicherten Zustandes und/oder Diagnoseergebnissen an eine von der Baugruppeneinheit 1 umfasste Registrierungseinheit 26.

### Bezugszeichenliste

- 1: Baugruppeneinheit
- 2: elektronische Schaltungseinheit
- 3: Gehäuse
- 4: Schaltsystem
- 5: Richtung
- 6a: Komponente mit hinterlegtem Gerätetreiber
- 6b: Peripherieanschluss
- 6c: Anschlussleitungen
- 6d: Verbrauchselemente
- 8: Signalverarbeitungseinheit
- 9: Sicherungsausnehmung
- 10: Sicherungs- und Entsicherungselement
- 11: elektrische Kontakte
- 12: Bewegungserfassungsvorrichtung
- 14: Entsicherungssignal
- 16: Lastfreischaltsignal
- 18: Signaleinkopplungselement
- 19: Signalwechsel auslösender Zustand
- 20: Signalempfangselement
- 21: Meldungssignal
- 22: Führungsarm
- 24: Rastelement
- 26: Registrierungseinheit
- 28: Sicherungssignal
- 30: Signalverarbeitungseinheit des Schaltsystems
- 38: Griffelement

## Patentansprüche

1. Baugruppeneinheit (1), die innerhalb eines Gehäuse (3)
- eine elektronische Schaltungseinheit (2) beherbergt, die zur Signal- und Stromversorgung mit einem übergeordneten Schaltsystem (4) elektrisch verbindbar ist und eine Signalverarbeitungseinheit (8) zur Ansteuerung von an die Baugruppeneinheit angeschlossenen oder innerhalb des Gehäuses eingebauten Verbrauchselemente (6d) aufweist, umfassend:
- ein an der Baugruppeneinheit (1) beweglich gehaltenes mechanisches Sicherungs- und Entsicherungselement (10) zur mechanischen Sicherung und Entsicherung der elektronischen Schaltungseinheit (2) in einem mit einem übergeordneten Schaltsystem (4) elektrisch verbundenen Zustand,
- wobei das Sicherungs- und Entsicherungselement (10) relativ zu der Baugruppeneinheit (1) zwischen wenigstens zwei Positionen manuell von außerhalb der Baugruppeneinheit (1) bewegbar ist,
- eine an der Baugruppeneinheit (1) angeordnete Bewegungserfassungsvorrichtung (12), die ausgebildet ist, zur Erfassung einer Relativbewegung des Sicherungs- und Entsicherungselements (10), wobei die Bewegungserfassungsvorrichtung (12) ausgebildet ist, unter Ansprechen auf eine Relativbewegung aus einer ersten Position, in welcher die elektronische Schaltungseinheit (2) in dem elektrisch verbundenen Zustand vollständig mechanisch gesichert ist, in eine zweite Position, in welcher die elektronische Schaltungseinheit (2) in dem elektrisch verbundenem Zustand zumindest teilweise mechanisch entsichert ist, ein Entsicherungssignal (14) zu erzeugen und an die Signalverarbeitungseinheit (4) weiterzuleiten,
- wobei die Signalverarbeitungseinheit (8) ausgebildet ist, in Antwort auf das Entsicherungssignal (14) unter Last befindliche Verbrauchselemente (6d) mittels Generierung wenigstens eines Lastfreischaltsignals (16) lastfrei zu schalten, so dass ein vollständiges Trennen der Baugruppeneinheit (1) mit laststromfreier elektronischer Schaltungseinheit (2) von dem übergeordneten Schaltsystem (4) im laufenden Betrieb ermöglicht ist.

2. Baugruppeneinheit (1) nach Anspruch 1, **dadurch gekennzeichnet, dass die** Signalverarbeitungseinheit (8) zusätzlich dazu ausgebildet ist, die Verbrauchselemente (6d) von der Schaltungseinheit (2) jeweils einzeln elektrisch abzuschalten, d.h. lastfrei zu schalten, insbesondere mittels Generierung mehrerer Lastfreischaltsignale (16).

3. Baugruppeneinheit (1) nach einem der Ansprüche 1 oder 2, **dadurch gekennzeichnet, dass** die Bewegungserfassungsvorrichtung (12) einen optischen Sensor, einen Bewegungssensor und/oder einen Beschleunigungssensor besitzt.

4. Baugruppeneinheit (1) nach Anspruch 1, 2 oder 3,
**dadurch gekennzeichnet, dass** die Bewegungserfassungsvorrichtung (12) zumindest ein Signaleinkopplungselement (18) und ein damit kommunizierendes Signalempfangselement (20) aufweist, wobei eines dieser beiden Elemente (18, 20) an einer Komponente aus der aus dem Gehäuse (3), dem Sicherungs- und Entsicherungselement (10) und der Schaltungseinheit (2) bestehenden Gruppe von Komponenten angeordnet ist und das andere dieser beiden Elemente (18, 20) an einer der zwei verbleibenden Komponenten aus dieser Gruppe von Komponenten angeordnet ist, und wobei entweder in der ersten Position oder in der zweiten Position des Sicherungs- und Entsicherungselement (10) eine Kommunikation zwischen dem Signaleinkopplungselement (18) und dem Signalempfangselement (20) ermöglicht ist und in der anderen Position keine solche Kommunikation ermöglicht ist..

5. Baugruppeneinheit (1) nach einem der vorhergehenden Ansprüche, **dadurch gekennzeichnet, dass** das Sicherungs- und Entsicherungselement (10) innerhalb des Gehäuses (3) gehalten ist und einen Führungsarm (22) besitzt, der aus dem Gehäuseinnern kommend aus Baugruppeneinheit (1) heraus geführt ist und/oder wobei das Sicherungs- und Entsicherungselement (10) mit einem Rastelement (24) zum mechanischem Sichern der elektronischen Schaltungseinheit (2) in elektrisch verbundenem Zustand ausgebildet ist, insbesondere mit einem Rastelement zum Verrasten mit einem komplementären, am elektrisch zu verbindenden Schaltsystem ausgebildeten Rastelement.

6. Baugruppeneinheit (1) nach einem der vorhergehenden Ansprüche, **dadurch gekennzeichnet, dass** die Signalverarbeitungseinheit (8) bei Erfassen der zweiten Position ausgebildet ist,
- zum Durchführen von Testszenarien beim Ansteuern der Verbrauchselemente (6d) und/oder
- zum Erzeugen eines Signals (21) zum Melden eines elektrisch verbundenen jedoch zumindest teilweise mechanisch entsicherten Zustandes und/oder von Diagnoseergebnissen an das übergeordnete Schaltsystem in elektrisch verbundenem Zustand und/oder zum Melden eines elektrisch verbundenen jedoch zumindest teilweise mechanisch entsicherten Zustandes und/oder von Diagnoseergebnissen an eine von der Baugruppeneinheit (1) umfasste Registrierungseinheit (26).

7. Baugruppeneinheit (1) nach einem der vorhergehenden Ansprüche, **dadurch gekennzeichnet, dass** die Bewegungserfassungsvorrichtung (12) ausgebildet ist, unter Ansprechen auf eine Relativbewegung aus der zweiten Position in die erste Position ein Sicherungssignal (28) zu erzeugen und an die Signalverarbeitungseinheit (8) weiterzuleiten, wobei die Signalverarbeitungseinheit (8) ausgebildet ist, in Antwort auf das Sicherungssignal (28) lastfrei geschaltete Verbrauchselemente (6d) mit Laststrom zu beaufschlagen.

8. Verfahren zum Trennen einer innerhalb eines Gehäuses (3) einer Baugruppeneinheit (1) beherbergten elektronischen Schaltungseinheit (2), die eine Signalverarbeitungseinheit (8) zur Ansteuerung von an die Baugruppeneinheit angeschlossenen oder innerhalb des Gehäuses eingebauten Verbrauchselementen (6d) aufweist und zur Signal- und Stromversorgung mit einem übergeordneten Schaltsystem (4) elektrisch verbunden wird, umfassend die folgenden Schritte:
- Überführen der Schaltungseinheit (2) in elektrisch verbundenem Zustand mit dem übergeordneten Schaltsystem aus einem vollständig mechanisch gesicherten Zustand zunächst in einen zumindest teilweise mechanisch entsicherten Zustand, bevor ein vollständiges Trennen der Schaltungseinheit von dem übergeordneten Schaltsystem ermöglicht wird,
- wobei das Überführen aus dem vollständig mechanisch gesicherten Zustand in den zumindest teilweise mechanisch entsicherten Zustand mittels eines relativ zu der Baugruppeneinheit (1) zwischen wenigstens zwei Positionen manuell von außerhalb der Baugruppeneinheit (1) bewegbaren Sicherungs- und Entsicherungselements (10) der Baugruppeneinheit (1) erfolgt und diese Relativbewegung von der Baugruppeneinheit erfasst wird und in Folge unter Last befindliche Verbrauchselemente von der Signalverarbeitungseinheit lastfrei geschaltet werden.

9. Verfahren nach vorhergehendem Anspruch 8, **dadurch gekennzeichnet, dass** in dem elektrisch verbundenen Zustand mit dem übergeordneten Schaltsystem jedoch zumindest teilweise mechanisch entsicherten Zustand von der Signalverarbeitungseinheit (8),
- Testszenarien beim Ansteuern der Verbrauchselemente (6d) durchgeführt werden und/oder
- ein Signal erzeugt wird, zum Melden eines elektrisch verbundenen jedoch zumindest teilweise mechanisch entsicherten Zustandes und/oder Diagnoseergebnissen an das übergeordnete Schaltsystem in elektrisch verbundenem Zustand und/oder zum Melden eines elektrisch verbundenen jedoch zumindest teilweise mechanisch entsicherten Zustandes und/oder Diagnoseergebnissen an eine von der Baugruppeneinheit (1) umfasste Registrierungseinheit (26).

10. Verfahren nach vorgehendem Anspruch 8 oder 9, welches zum Trennen der innerhalb des Gehäuses (3) der Baugruppeneinheit (1) nach einem der Ansprüche 1 bis 7 beherbergten elektronischen Schaltungseinheit (2), angewendet wird.

## Claims

1. Assembly unit (1) which
accommodates within a housing (3)
- an electronic circuit unit (2) which can be electrically connected to a higher-level switching system (4) for signal and power supply and has a signal processing unit (8) for controlling consumer elements (6d) which are connected to the assembly unit or are installed within the housing, comprising:
- a mechanical securing and unlocking element (10) movably held on the assembly unit (1) for mechanically securing and unlocking the electronic circuit unit (2) in a state electrically connected to a higher-level switching system (4),
- the securing and unlocking element (10) being movable relative to the assembly unit (1) between at least two positions manually from outside the assembly unit (1),
- a movement detection device (12) arranged on the assembly unit (1), which is designed to detect a relative movement of the securing and unlocking element (10), wherein the movement detection device (12) is designed to generate an unlock signal (14) and to forward it to the signal processing unit (4) in response to a relative movement from a first position, in which the electronic circuit unit (2) is completely mechanically secured in the electrically connected state, into a second position in which the electronic circuit unit (2) is at least partially mechanically unlocked in the electrically connected state, ,
the signal processing unit (8) being designed to switch consumer elements (6d ) which are under load load-free in response to the unlock signal (14) by means of generating at least one load disconnection signal (16), so that complete disconnection of the assembly unit (1) with load-free electronic circuit unit (2) from the higher-level switching system (4) is possible during ongoing operation.

2. Assembly unit (1) according to claim 1, **characterized in that** the signal processing unit (8) is additionally designed to electrically disconnect the consumer elements (6d) from the circuit unit (2) individually in each case, i.e. to switch them load-free, in particular by means of generating a plurality of load disconnection signals (16).

3. Assembly unit (1) according to one of claims 1 or 2, **characterized in that** the motion detection device (12) has an optical sensor, a motion sensor and/or an acceleration sensor.

4. Assembly unit (1) according to claim 1, 2 or 3, **characterized in that** the motion detection device (12) comprises at least one signal coupling element (18) and one signal receiving element (20) communicating therewith, wherein one of these two elements (18, 20) is arranged on one component from the group of components consisting of the housing (3), the securing and unlocking element (10) and the circuit unit (2) and the other of these two elements (18, 20) is arranged on one of the two remaining components of said group of components, and wherein
either in the first position or in the second position of the securing and unlocking element (10) communication between the signal coupling element (18) and the signal receiving element (20) is enabled and in the other position no such communication is enabled.

5. Assembly unit (1) according to one of the preceding claims, **characterized in that** the securing and unlocking element (10) is held within the housing (3) and has a guide arm (22) which is guided out of the assembly unit (1) coming from the interior of the housing and/or wherein the securing and unlocking element (10) is formed with a latching element (24) for mechanically securing the electronic circuit unit (2) in the electrically connected state, in particular with a latching element for latching with a complementary latching element formed on the switching system to be electrically connected.

6. Assembly unit (1) according to one of the preceding claims, **characterized in that** the signal processing unit (8) is designed upon detection of the second position,
- for carrying out test scenarios when driving the consumer elements (6d) and/or
- for generating a signal (21) for reporting an electrically connected but at least partially mechanically unlocked state and/or diagnostic results to the higher-level switching system in an electrically connected state and/or for reporting an electrically connected but at least partially mechanically unlocked state and/or diagnostic results to a registration unit (26) comprised by the assembly unit (1).

7. Assembly unit (1) according to one of the preceding claims, **characterized in that** the movement detection device (12) is designed to generate a securing signal (28) in response to a relative movement from the second position into the first position and to forward it to the signal processing unit (8),
the signal processing unit (8) being designed to apply in response to the fuse signal (28) load current to consumer elements (6d) which are switched load-free.

8. Method for disconnecting an electronic circuit unit (2) accommodated within a housing (3) of an assembly unit (1), which has a signal processing unit (8) for controlling consumer elements (6d) which are connected to the assembly unit or are installed within the housing and is electrically connected to a higher-level switching system (4) for signal and power supply, comprising the following steps:
- transferring the circuit unit (2) in an electrically connected state to the higher-level switching system from a fully mechanically secured state first to an at least partially mechanically unlocked state before a complete disconnection of the circuit unit from the higher-level switching system is enabled,
- wherein the transfer from the fully mechanically secured state to the at least partially mechanically unlocked state is performed by means of a securing and unlocking element (10) being movable relative to the assembly unit (1) between at least two positions manually from outside the assembly unit (1) and wherein the relative movement is detected by the assembly unit and, as a result, consumer elements under load are switched load-free by the signal processing unit.

9. Method according to preceding claim 8, **characterized in that** in the electrically connected state with the higher-level switching system, however, at least partially mechanically unlocked state
by the signal processing unit (8),
- test scenarios are carried out when actuating the consumer elements (6d) and/or
- a signal is generated for reporting an electrically connected but at least partially mechanically unlocked state and/or diagnostic results to the higher-level switching system in the electrically connected state and/or for reporting an electrically connected but at least partially mechanically unlocked state and/or diagnostic results to a registration unit (26) comprised by the assembly unit (1).

10. Method according to preceding claim 8 or 9, which is applied to separate the electronic circuit unit (2) housed within the housing (3) of the module unit (1) according to one of claims 1 to 7.

## Revendications

1. Unité modulaire (1), laquelle loge, à l'intérieur d'un boîtier (3),
- une unité de commutation (2) électronique, laquelle peut être connectée électriquement à un système de commutation (4) supérieur pour l'alimentation en signaux et en courant et comporte une unité de traitement de signal (8) pour commander des éléments consommateurs (6d) connectés à l'unité modulaire ou montés à l'intérieur du boîtier, comprenant :
- un élément de verrouillage et de déverrouillage (10) mécanique monté mobile sur l'unité modulaire (1) pour verrouiller et déverrouiller de manière mécanique l'unité de commutation (2) électronique dans un état connecté électriquement au système de commutation (4) supérieur,
- dans laquelle l'élément de verrouillage et de déverrouillage (10) peut être déplacé manuellement par rapport à l'unité modulaire (1) entre au moins deux positions depuis l'extérieur de l'unité modulaire (1),
- un dispositif de détection de mouvement (12) disposé sur l'unité modulaire (1), lequel est conçu pour détecter un mouvement relatif de l'élément de verrouillage et de déverrouillage (10),le dispositif de détection de mouvement (12) étant conçu, en réponse à un mouvement relatif, pour passer d'une première position, dans laquelle l'unité de commutation (2) électronique est entièrement verrouillée mécaniquement dans l'état connecté électriquement, à une seconde position dans laquelle l'unité de commutation (2) électronique est au moins partiellement déverrouillée mécaniquement dans l'état connecté électriquement, et pour générer un signal de déverrouillage (14) et pour le transmettre à l'unité de traitement de signal (4),
- dans laquelle l'unité de traitement de signal (8) est conçue pour commuter sans charge, en réponse au signal de déverrouillage (14), les éléments consommateurs (6d) se trouvant sous charge, au moyen de la génération d'au moins un signal de commutation sans charge (16) de telle sorte qu'une séparation complète de l'unité modulaire (1) de l'unité de commutation (2) électronique sans courant de charge du système de commutation (4) supérieur est possible en cours de fonctionnement.

2. Unité modulaire (1) selon la revendication 1, **caractérisée en ce que l**'unité de traitement de signal (8) est en outre conçue pour déconnecter électriquement, respectivement individuellement, les éléments consommateurs (6d) de l'unité de commutation (2), c'est-à-dire pour les connecter sans charge, en particulier au moyen de la génération de plusieurs signaux de commutation sans charge (16).

3. Unité modulaire (1) selon l'une quelconque des revendications 1 ou 2, **caractérisée en ce que** le dispositif de détection de mouvement (12) comporte un capteur optique, un capteur de mouvement et/ou un capteur d'accélération.

4. Unité modulaire (1) selon la revendication 1, 2 ou 3, **caractérisée en ce que** le dispositif de détection de mouvement (12) comporte au moins un élément de couplage de signal (18) et un élément de réception de signal (20) communiquant avec celui-ci, dans laquelle l'un desdits deux éléments (18, 20) est disposé sur un composant du groupe de composants constitué par le boîtier (3), l'élément de verrouillage et de déverrouillage (10) et l'unité de commutation (2) et l'autre desdits deux éléments (18, 20) est disposé sur l'un des deux composants restants dudit groupe de composants, et dans laquelle, dans la première position ou dans la seconde position de l'élément de verrouillage et de déverrouillage (10), une communication entre l'élément de couplage de signal (18) et l'élément de réception de signal (20) est possible et, dans l'autre position, aucune telle communication n'est possible.

5. Unité modulaire (1) selon l'une quelconque des revendications précédentes, **caractérisée en ce que** l'élément de verrouillage et de déverrouillage (10) est maintenu à l'intérieur du boîtier (3) et comporte un bras de guidage (22), lequel est guidé hors de l'unité modulaire (1) en venant de l'intérieur du boîtier et/ou dans laquelle l'élément de verrouillage et de déverrouillage (10) est conçu pour verrouiller mécaniquement l'unité de commutation (2) électronique dans l'état connecté électriquement à l'aide d'un élément d'encliquetage (24), en particulier un élément d'encliquetage qui va s'encliqueter dans un élément d'encliquetage complémentaire conçu sur le système de commutation à connecter électriquement.

6. Unité modulaire (1) selon l'une quelconque des revendications précédentes, **caractérisée en ce que** l'unité de traitement de signal (8) est conçue, lors de la détection de la seconde position,
- pour mettre en œuvre des scénarios d'essai lors de la commande des éléments consommateurs (6d) et/ou
- pour générer un signal (21) pour signaler l'état connecté électriquement mais au moins partiellement déverrouillé mécaniquement et/ou des résultats de diagnostic au système de commutation supérieur dans l'état connecté électriquement et/ou pour signaler l'état connecté électriquement mais au moins partiellement déverrouillé mécaniquement et/ou des résultats de diagnostic à une unité d'enregistrement (26) comprise par l'unité modulaire (1).

7. Unité modulaire (1) selon l'une quelconque des revendications précédentes, **caractérisée en ce que** le dispositif de détection de mouvement (12) est conçu, en réponse à un mouvement relatif de la seconde position vers la première position, pour générer un signal de verrouillage (28) et pour le transmettre à l'unité de traitement de signal (8), dans laquelle l'unité de traitement de signal (8) est conçue, en réponse au signal de verrouillage (28), pour alimenter en courant de charge les éléments consommateurs (6d) commutés sans charge.

8. Procédé de séparation d'une unité de commutation (2) électronique logée à l'intérieur d'un boîtier (3) d'une unité modulaire (1), laquelle comporte une unité de traitement de signal (8) pour commander des éléments consommateurs (6d) connectés à l'unité modulaire ou montés à l'intérieur du boîtier et laquelle est connectée électriquement à un système de commutation (4) supérieur pour alimenter en signal et en courant, comprenant les étapes suivantes :
- le passage de l'unité de commutation (2) dans un état connecté électriquement au système de commutation supérieur d'un état entièrement verrouillé mécaniquement à un état au moins partiellement déverrouillé mécaniquement, avant de permettre une séparation complète de l'unité de commutation du système de commutation supérieur,
- dans lequel le passage de l'état entièrement verrouillé mécaniquement dans l'état au moins partiellement déverrouillé mécaniquement s'effectue au moyen d'un élément de verrouillage et de déverrouillage (10) de l'unité modulaire (1) pouvant être déplacé manuellement par rapport à l'unité modulaire (1) entre au moins deux positions depuis l'extérieur de l'unité modulaire (1), et ledit mouvement relatif est détecté par l'unité modulaire et, en conséquence, les éléments consommateurs se trouvant sous charge sont commutés sans charge par l'unité de traitement de signal.

9. Procédé selon la revendication 8 précédente, **caractérisé en ce que,** dans l'état connecté électriquement au système de commutation supérieur, l'unité de traitement de signal (8) est au moins partiellement déverrouillée mécaniquement,
- des scénarios d'essai sont mis en œuvre lors de la commande des éléments consommateurs (6d) et/ou
- un signal est généré pour signaler l'état connecté électriquement mais au moins partiellement déverrouillé mécaniquement et/ou les résultats de diagnostic au système de commutation supérieur dans l'état connecté électriquement et/ou pour signaler l'état connecté électriquement mais au moins partiellement déverrouillé mécaniquement et/ou les résultats de diagnostic à une unité d'enregistrement (26) comprise par l'unité modulaire (1).

10. Procédé selon la revendication 8 ou 9 précédente, lequel est mis en œuvre pour séparer l'unité de commutation (2) électronique logée à l'intérieur du boîtier (3) de l'unité modulaire (1) selon l'une quelconque des revendications 1 à 7.
